# FASCICULE DE BREVET EUROPEEN

(11) **EP 2 315 986 B1**
(45) Date de publication et mention de la délivrance du brevet: **04.07.2012**
(21) Numéro de dépôt: 09737029.0
(22) Date de dépôt: 25.08.2009
(51) Int. Cl.: F25B 21/00

(54) **GÉNÉRATEUR THERMIQUE À MATÉRIAU MAGNÉTOCALORIQUE**
WÄRMEGENERATOR MIT MAGNETOKALORISCHEM MATERIAL
THERMAL GENERATOR WITH MAGNETOCALORIC MATERIAL

(30) Priorité: 26.08.2008 FR 0804699
(43) Date de publication de la demande: 04.05.2011
(73) Titulaire: Cooltech Applications S.A.S., 67810 Holtzheim (FR)
(72) Inventeur: HEITZLER, Jean-Claude, F-68180 Horbourg-Wihr (FR); MULLER, Christian, F-67000 Strasbourg (FR)
(74) Mandataire: Nithardt, Roland
(86) Numéro de dépôt international: PCT/FR2009/001028
(87) Numéro de publication internationale: WO 2010/023378

(56) Documents cités:
- WO-A-2005/093343
- FR-A- 997 056
- DATABASE WPI Week 198937 Thomson Scientific, London, GB; AN 1989-269564 XP002526383 -& SU 1 467 339 A1 (KARAGUSOV V I) 23 mars 1989 (1989-03-23)

## Description

### Domaine technique:

La présente invention concerne le domaine de la génération d'énergie thermique et concerne plus particulièrement un générateur thermique à élément magnétocalorique. Ce générateur thermique est constitué par au moins un module thermique intégrant un élément magnétocalorique disposé entre deux chambres thermiques chaude et froide, ledit élément magnétocalorique étant traversé de part et d'autre par un volume de fluide caloporteur incompressible, ce volume de fluide étant déplacé par l'intermédiaire d'un premier et d'un second moyens de circulation disposés chacun dans une des chambres chaude ou froide et renvoyant chacun alternativement le fluide en direction du moyen de circulation opposé en réalisant un mouvement de va-et-vient entre les extrémités opposées de la chambre chaude ou froide correspondante, ledit générateur thermique comportant également un arrangement magnétique agencé pour soumettre alternativement chaque élément magnétocalorique à une variation de champ magnétique et créer alternativement dans ledit élément magnétocalorique un cycle d'échauffement et un cycle de refroidissement, générant la création puis le maintien d'un gradient de température entre les deux extrémités opposées dudit élément magnétocalorique, le déplacement alterné du fluide caloporteur étant synchronisé avec la variation du champ magnétique, ledit second moyen de circulation comportant un organe de compensation autorisant, d'une part, lors du déplacement du premier moyen de circulation vers l'élément magnétocalorique, le déplacement dans le même sens dudit second moyen de circulation vers l'extrémité de la chambre chaude ou froide correspondante éloignée de l'élément magnétocalorique et, d'autre part, renvoyant automatiquement le second moyen de circulation vers l'élément magnétique lors du retour du premier moyen de circulation vers l'extrémité de la chambre froide ou chaude correspondante éloignée de l'élément magnétocalorique.

### Technique antérieure :

La technologie du froid magnétique à température ambiante est connue depuis plus d'une vingtaine d'années et on sait les avantages qu'elle apporte en termes d'écologie et de développement durable. On connaît également ses limites quant à sa puissance calorifique utile et à son rendement. Dès lors, les recherches menées dans ce domaine tendent toutes à améliorer les performances d'un tel générateur, en jouant sur les différents paramètres, tels que la puissance d'aimantation, les performances de l'élément magnétocalorique, la surface d'échange entre le fluide caloporteur et les éléments magnétocaloriques, les performances des échangeurs de chaleur, etc.

Une des difficultés dans la réalisation de générateurs utilisant un ou plusieurs éléments magnétocaloriques réside dans l'échange d'énergie thermique entre ces éléments magnétocaloriques et le ou les circuits utilisant, consommant ou échangeant l'énergie thermique avec le générateur, et reliés à ce dernier générateur. Une solution permettant de réaliser cet échange consiste à faire circuler un fluide caloporteur, liquide ou non, à travers les éléments magnétocaloriques, en synchronisation avec la variation du champ magnétique à laquelle sont soumis les éléments magnétocaloriques.

Dans sa demande de brevet français n° 0707612, la demanderesse présente un générateur thermique à matériau magnétocalorique dans lequel le fluide caloporteur est mis en circulation entre les éléments magnétocaloriques et deux chambres d'échange dites chambre chaude et chambre froide. Cette mise en circulation est réalisée par l'intermédiaire de deux jeux de pistons situés en regard des éléments magnétocaloriques et entraînés pas une came de commande reliée à un actionneur.

Ce générateur présente toutefois un inconvénient inhérent à la nécessité de deux moyens pour actionner les deux jeux de pistons situés de part et d'autre de chaque élément magnétocalorique. Cela entraîne une augmentation du nombre de pièces constituant le générateur, et plus particulièrement du nombre de pièces en mouvement et donc une augmentation du risque de mauvais fonctionnement, un risque d'usure accru du fait du contact permanent entre la came et les pistons, et une dégradation du rendement du générateur. De plus, il pose des problèmes d'étanchéité entre la chemise des pistons et le mécanisme d'entraînement ou la came.

La publication FR 997 056 décrit un appareil de réfrigération selon le préambule de la nouvelle revendication 1. Il utilise l'effet magnétocalorique de deux éléments ferromagnétiques traversés par un fluide caloporteur déplacé alternativement par un piston central unique entre une chambre froide et une chambre chaude, le tout formant un circuit fermé. Ce piston est entraîné par un accouplement magnétique et est assujetti à deux ressorts de rappel en opposition qui le ramène en position centrale initiale. Les chambres chaude et froide ne sont pas séparées et ne constituent pas avec l'élément thermique correspondant un module thermique à part entière, capable d'être dupliqué pour augmenter la puissance thermique d'un tel générateur.

### Exposé de l'invention:

La présente invention vise à pallier ces inconvénients en proposant un générateur thermique dans lequel le nombre d'organes d'actionnement ou de manoeuvre des moyens assurant la circulation du fluide caloporteur est réduit, et le nombre de modules thermiques n'est pas limité pour adapter la puissance thermique du générateur à l'application souhaitée.

A cet effet, elle propose un générateur thermique du genre indiqué en préambule Caractérisé en ce que ledit organe de compensation comporte au moins un organe de liaison fluidique entre les volumes des chambres chaude et froide situés derrière les premier et second moyens de circulation par rapport à l'élément magnétocalorique, cet organe de liaison fluidique et ces volumes formant un circuit fermé rempli d'un fluide d'entraînement incompressible.

Lorsque le générateur magnétocalorique selon l'invention comporte plus d'un module thermique, ces derniers peuvent être disposés de manière adjacente les uns aux autres, de préférence avec les éléments magnétocaloriques alignés ou disposés à un même niveau.

L'organe de liaison fluidique peut intégrer un étrangleur permettant de réguler la vitesse du fluide d'entraînement et donc celle des premier et second moyens de circulation. Le second moyen de circulation peut être choisi dans le groupe comprenant un piston, une membrane extensible.

### Description sommaire des dessins :

La présente invention et ses avantages apparaîtront mieux dans la description suivante des modes de réalisation donnés à titre d'exemples non limitatifs, en référence aux dessins annexés, dans lesquels:
- les figures 1A et 1B sont des vues en plan d'un générateur thermique selon l'invention, représentant les moyens de circulation dans leurs deux positions extrêmes, et
- les figures 2A et 2B sont des vues similaires à celles des figures 2A et 2B du générateur thermique dans lequel l'organe de compensation comporte un étrangleur.

### Différentes manières de réaliser l'invention :

Dans les exemples de réalisation illustrés, les pièces ou parties identiques portent les mêmes références numériques.

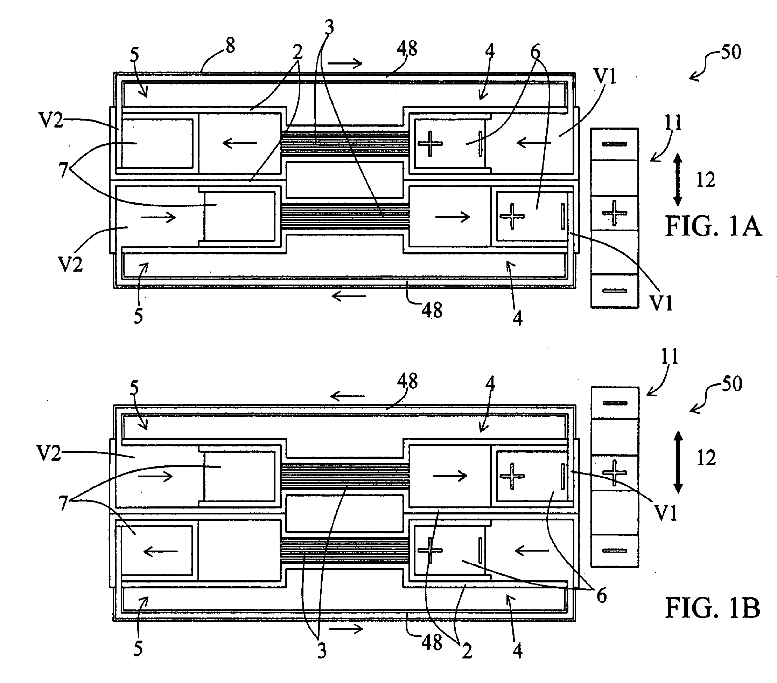

Les figures 1A et 1B représentent un générateur thermique 50 selon l'invention comportant deux modules thermiques 2 adjacents et superposés, intégrant chacun un élément magnétocalorique 3 disposé entre deux chambres chaude 4 et froide 5 et comportant un fluide caloporteur. Un premier moyen de circulation 6 du fluide caloporteur est disposé dans la chambre chaude 4 et un second moyen de circulation 7 est disposé dans la chambre froide 5 ou inversement. Un organe de compensation est réalisé sous la forme d'une conduite 48 formant un organe de liaison fluidique reliant les volumes V1 et V2 des chambres chaude 4 et froide 5 situés derrière les premier et second moyens de circulation 6 et 7 d'un même module thermique 2. La conduite 48 et ces volumes V1 et V2 contiennent un fluide d'entraînement incompressible qui circule d'un volume V1 vers l'autre volume V2 et inversement lors du déplacement du premier moyen de circulation 6.

Le déplacement alterné du fluide caloporteur dans le module thermique 2 est ainsi obtenu par cet organe de liaison fluidique 48 automatique associé au second moyen de circulation 7 du fluide et un organe de manoeuvre 11 commandant le déplacement du premier moyen de circulation 6.

Le générateur thermique 1 comporte également un arrangement magnétique (non représenté) soumettant alternativement chaque élément magnétocalorique 3 à une variation de champ magnétique, et le déplacement alterné du fluide caloporteur est synchronisé avec la variation du champ magnétique.

L'élément magnétocalorique 3 est perméable au fluide caloporteur et peut être constitué par un ou plusieurs matériaux magnétocaloriques. Il comporte des passages de fluide débouchant qui peuvent être constitués par les pores d'un matériau poreux, des mini ou micro-canaux usinés dans un bloc plein ou obtenus par un assemblage de plaques rainurées superposées, par exemple.

L'organe de manoeuvre 11 représenté est un chariot disposé face aux chambres chaudes 4 dans lesquelles sont montés les premiers moyens de circulation 6, formés par des pistons. Ces pistons 6 intègrent chacun un aimant susceptible d'interagir avec des aimants de différentes polarités montés sur ou intégrés dans le charriot 11 qui se déplace devant les modules thermiques 2 selon un mouvement de translation et de va-et-vient représenté par la double flèche 12.

En référence à la figure 1A, lorsque le premier moyen de déplacement 6 est déplacé par le chariot 11 vers l'élément magnétocalorique 3 (vers la gauche dans le module thermique 2 supérieur), le fluide caloporteur est poussé à travers l'élément magnétocalorique 3 vers la chambre froide 5, ce qui a pour effet, d'une part, de pousser le second moyen de circulation 7 vers le fond de la chambre froide 5 et, d'autre part, de faire circuler le fluide d'entraînement du volume V2 vers le volume V1 à travers la conduite 48.

Lorsque le chariot 11 est mis en translation, d'autres aimants interagissent alors avec les pistons 6. La figure 1B représente, dans le module thermique 2 supérieur, le retour du premier moyen de circulation 6 dans sa position initiale (vers la droite), qui a pour effet de chasser le fluide d'entraînement du volume V1 en direction du volume V2 de la chambre chaude 5, entraînant automatiquement le second moyen de circulation 7 vers la droite.

Un mouvement de va-et-vient du fluide caloporteur est ainsi obtenu avec un seul organe de manoeuvre, ce dernier commandant uniquement les moyens de circulation situés d'un côté des modules thermiques 2.

Dans une variante non représentée, l'unique organe de manoeuvre 11 peut être remplacé par tout moyen équivalent et par exemple une came de commande entraînée par un actionneur et comportant un profil de came de forme sensiblement sinusoïdale dont l'amplitude détermine la course des premiers moyens de circulation 6 sous la forme de pistons.

Les premiers et seconds moyens de circulation 6 et 7 peuvent présenter toute forme leur permettant de déplacer le fluide caloporteur, par exemple un piston ou une membrane.

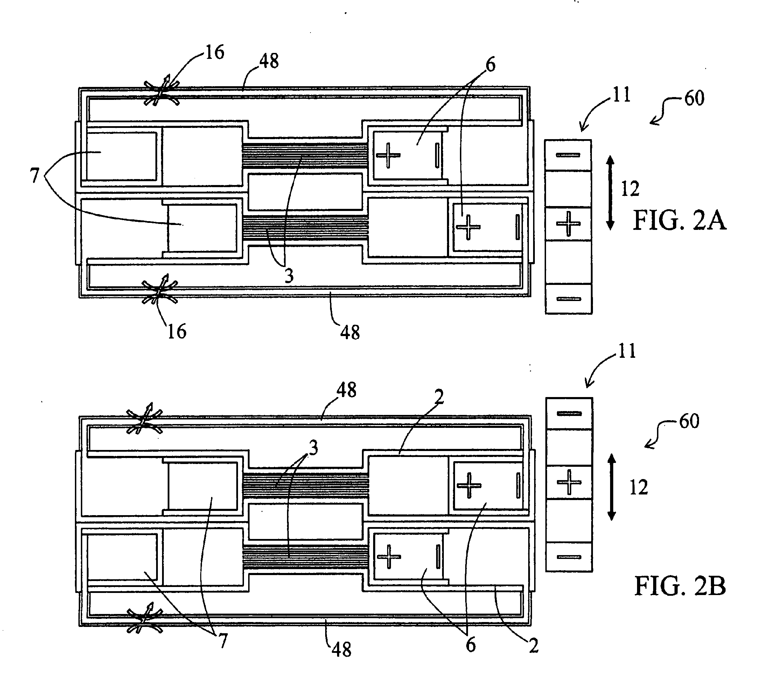

Il peut en outre être prévu d'intégrer un étrangleur 16 dans la conduite 48, tel que cela est représenté dans le générateur thermique 60 des figures 2A et 2B. Ce générateur thermique 60 qui présente la même configuration que le générateur thermique 50, permet, grâce à l'étrangleur 16, de régler la vitesse de déplacement du fluide d'entraînement, et donc la vitesse de déplacement des premier et second moyens de circulation 6 et 7. Cela permet en outre de déterminer le temps de passage du fluide caloporteur à travers l'élément magnétocalorique 3 et donc d'exploiter au maximum les propriétés calorifiques de ce dernier.

Bien que l'ensemble des figures représentent un générateur thermique linéaire, l'invention s'applique également à un générateur thermique de configuration circulaire dans lequel les modules thermiques 2 sont disposés en cercle autour d'un axe central, ou selon toute autre configuration. L'invention s'applique à tout générateur dans lequel chaque module thermique 2 comprend un premier moyen de circulation 6 de fluide caloporteur manoeuvré par tout type d'organe de commande ou de manoeuvre, et un second moyen de circulation 7 qui comporte ou intègre un organe de compensation 48 selon l'invention lui permettant de se déplacer selon un mouvement alterné d'une position extrême à l'autre dans la chambre, de manière à imprimer une circulation alternée au fluide de part et d'autre et à travers l'élément magnétocalorique 3.

### Possibilités d'application industrielle :

Il ressort clairement de cette description que l'invention permet d'atteindre les buts fixés, à savoir proposer un générateur magnétocalorique 50, 60 de construction simple limitant le nombre d'organes de manoeuvre pour la circulation du fluide caloporteur dans les modules thermiques 2 à travers l'élément magnétocalorique 3, limitant les risques de perte d'étanchéité du générateur magnétocalorique et augmentant sa durée de vie.

Un tel générateur thermique 50, 60 peut trouver une application aussi bien industrielle que domestique dans le domaine du chauffage, de la climatisation, du tempérage, refroidissement ou autres, ce, à des coûts compétitifs et dans un faible encombrement.

En outre, toutes les pièces composant ce générateur thermique 50, 60 peuvent être réalisées selon des processus industriels reproductibles.

La présente invention n'est pas limitée aux exemples de réalisation décrits mais s'étend à toute modification et variante évidentes pour un homme du métier tout en restant dans l'étendue de la protection définie dans les revendications annexées.

## Revendications

1. Générateur thermique, constitué par au moins un module thermique (2) intégrant un élément magnétocalorique (3) disposé entre deux chambres thermiques chaude (4) et froide (5), ledit élément magnétocalorique (3) étant traversé de part et d'autre par un volume de fluide caloporteur incompressible, ce volume de fluide étant déplacé par l'intermédiaire d'un premier et d'un second moyens de circulation (6, 7) disposés chacun dans une des chambres chaude (4) ou froide (5) et renvoyant chacun alternativement le fluide en direction du moyen de circulation opposé (7, 6) en réalisant un mouvement de va-et-vient entre les extrémités opposées de la chambre chaude (4) ou froide (5) correspondante, ledit générateur thermique (1) comportant également un arrangement magnétique agencé pour soumettre alternativement chaque élément magnétocalorique (3) à une variation de champ magnétique et créer alternativement dans ledit élément magnétocalorique (3) un cycle d'échauffement et un cycle de refroidissement, générant la création puis le maintien d'un gradient de température entre les deux extrémités opposées dudit élément magnétocalorique (3), le déplacement alterné du fluide caloporteur étant synchronisé avec la variation du champ magnétique, générateur thermique (50, 60), le second moyen de circulation (7) comportant un organe de compensation (48) autorisant, d'une part, lors du déplacement du premier moyen de circulation (6) vers l'élément magnétocalorique (3), le déplacement dans le même sens dudit second moyen de circulation (7) vers l'extrémité de la chambre chaude ou froide (4 ou 5) correspondante éloignée de l'élément magnétocalorique (3) et, d'autre part, renvoyant automatiquement le second moyen de circulation (7) vers l'élément magnétique (3) lors du retour du premier moyen de circulation (6) vers l'extrémité de la chambre froide ou chaude (5 ou 4) correspondante éloignée de l'élément magnétocalorique (3), **caractérisé en ce que** ledit organe de compensation comporte au moins un organe (48) de liaison fluidique entre les volumes (V1 et V2) des chambres chaude (4) et froide (5) situés derrière les premier et second moyens de circulation (6, 7) par rapport à l'élément magnétocalorique (3), cet organe (48) de liaison fluidique et ces volumes (V1 et V2) formant un circuit fermé rempli d'un fluide d'entraînement incompressible.

2. Générateur thermique, selon la revendication 1, **caractérisé en ce que** l'organe (48) de liaison fluidique intègre un étrangleur (16).

3. Générateur thermique, selon l'une quelconque des revendications 1 et 2, **caractérisé en ce que** le second moyen de circulation (7) est choisi dans le groupe comprenant un piston, une membrane extensible.

## Claims

1. Thermal generator made up by at least one thermal module (2) including a magnetocaloric element (3) arranged between two hot (4) and cold (5) thermal chambers, said magnetocaloric element (3) being crossed by a volume of an incompressible heat transfer fluid, this volume of fluid being put into motion by means of first and second circulation means (6, 7) arranged each in one of the hot (4) or cold (5) chambers and sending each alternately the fluid towards the opposite circulation means (7, 6), achieving a reciprocating movement between the opposite ends of the corresponding hot (4) or cold (5) chamber, said thermal generator (1) comprising also a magnetic arrangement intended for subjecting alternately each magnetocaloric element (3) to a magnetic field variation and creating alternately in said magnetocaloric element (3) a heating cycle and a cooling cycle, generating the creation and then maintaining a temperature gradient between the two opposite ends of said magnetocaloric element (3), the reciprocating displacement of the heat transfer fluid being synchronized with the magnetic field variation, the second circulation means (7) comprising a compensation element (48) allowing on the one hand, during the displacement of the first circulation means (6) towards the magnetocaloric element (3), the displacement of the second circulation means (7) in the same direction towards the end of the corresponding hot or cold chamber (4 or 5) distant from the magnetocaloric element (3) and, on the other hand, sending automatically the second circulation means (7) back towards the magnetocaloric element (3) when the first circulation means (6) moves back to the end of the corresponding cold or hot chamber (5 or 4) distant from the magnetocaloric element (3), thermal generator (50, 60) **characterized in that** said compensation element comprises at least one fluidic communication element (48) between the volumes (V1 and V2) of the hot (4) and cold (5) chambers located behind the first and second circulation means (6, 7) with respect to the magnetocaloric element (3), this fluidic communication element (48) and these volumes (V1 and V2) forming a closed circuit filled with an incompressible drive fluid.

2. Thermal generator according to claim 1, **characterized in that** the fluidic communication element (48) includes a throttle valve (16).

3. Thermal generator according to any of claims 1 and 2, **characterized in that** the second circulation means (7) is chosen from the group including a piston, an extensible membrane.

## Patentansprüche

1. Wärmegenerator bestehend aus mindestens einem Wärmemodul (2) mit einem zwischen einer warmen (4) und einer kalten (5) Wärmekammer angeordneten magnetokalorischen Element (3), wobei das besagte magnetokalorische Element (3) von einem Volumen eines inkompressiblen Wärmeübertragungsfluids durchströmt wird, wobei dieses Fluidvolumen mittels eines ersten und eines zweiten Zirkulationsmittels (6, 7) in Bewegung gesetzt wird, die jeweils in einer der warmen (4) oder kalten (5) Kammern angeordnet sind und die jeweils abwechselnd das Fluid in Richtung des gegenüberliegenden Zirkulationsmittels (7, 6) fördern, wodurch sie eine Hin-und-HerBewegung zwischen den entgegen gesetzten Enden der entsprechenden warmen (4) oder kalten (5) Kammer ausführen, wobei der besagte Wärmegenerator (1) ebenfalls eine magnetische Anordnung aufweist, die ausgelegt ist, um jedes magnetokalorische Element (3) abwechselnd einer Magnetfeld-Variation auszusetzen und abwechselnd in dem besagten magnetokalorischen Element (3) einen Heiz-Zyklus und einen Kühl-Zyklus zu erzeugen, wodurch ein Temperatur-Gradient zwischen den beiden entgegen gesetzten Enden des besagten magnetokalorischen Elements (3) erzeugt und anschließend erhalten wird, wobei die abwechselnde Bewegung des Wärmeübertragungsfluids mit der Magnetfeld-Variation synchronisiert ist, wobei das zweite Zirkulationsmittel (7) ein Ausgleichs-Element (48) beträgt, das einerseits bei der Bewegung des ersten Zirkulationsmittels (6) in Richtung des magnetokalorischen Elements (3) die Bewegung des besagten zweiten Zirkulationsmittels (7) in die selbe Richtung, in Richtung des Endes der entsprechenden von dem magnetokalorischen Element (3) entfernten warmen oder kalten Kammer (4 oder 5) erlaubt und andererseits das zweite Zirkulationsmittel (7) automatisch in Richtung des magnetokalorischen Elements (3) fördert wenn das erste Zirkulationsmittel (6) wieder in Richtung der entsprechenden von dem magnetokalorischen Element (3) entfernten kalten oder warmen Kammer (5 oder 4) zurückfährt, **dadurch gekennzeichnete**r Wärmegenerator (50, 60), dass das besagte Ausgleichs-Element mindestens ein Element (48) zur Fluidverbindung zwischen den Volumen (V1 und V2) der in Bezug auf das magnetikalorische Element (3) hinter dem ersten und dem zweiten Zirkulationsmittel (6, 7) befindlichen warmen (4) und kalten (5) Kammer aufweist, wobei dieses Element (48) zur Fluidverbindung und diese Volumen (V 1 und V2) einen geschlossenen, mit einem inkompressiblen Antriebs-Fluid gefüllten Kreislauf bilden.

2. Wärmegenerator nach Anspruch 1, **dadurch gekennzeichnet, dass** das Element (48) zur Fluidverbindung ein Drosselventil (16) beträgt.

3. Wärmegenerator nach einem beliebigen der Ansprüche 1. und 2, **dadurch gekennzeichnet, dass** das zweite Zirkulationsmittel (7) in der Gruppe bestehend aus einem Kolben, einer elastischen Membrane ausgewählt wird.
